# EUROPEAN PATENT SPECIFICATION

(11) **EP 4 320 773 B1**
(45) Date of publication and mention of the grant of the patent: **27.08.2025**
(21) Application number: 22715766.6
(22) Date of filing: 05.04.2022
(51) Int. Cl.: H04L 1/18

(54) **HARQ METHODS FOR PUCCH CARRIER SWITCHING**
HARQ-VERFAHREN FÜR PUCCH-TRÄGERWECHSEL
PROCÉDÉS HARQ POUR COMMUTATION DE PORTEUSES DE CANAL PUCCH

(30) Priority: 05.04.2021 US 202163170959 P; 06.04.2021 US 202163171535 P
(43) Date of publication of application: 14.02.2024
(73) Proprietor: Telefonaktiebolaget LM Ericsson (publ), 164 83 Stockholm (SE)
(72) Inventor: KITTICHOKECHAI, Kittipong, 177 63 JÄRFÄLLA (SE); ANDERSSON, Mattias, 172 39 SUNDBYBERG (SE); FALAHATI, Sorour, 112 29 STOCKHOLM (SE); BLANKENSHIP, Yufei, KILDEER, Illinois 60047 (US); SINGH, Bikramjit, 02880 KIRKKONUMMI (FI)
(74) Representative: Ericsson
(86) International application number: PCT/IB2022/053183
(87) International publication number: WO 2022/214973

(56) References cited:
- MEDIATEK INC: "On UE feedback enhancements for HARQ-ACK", vol. RAN WG1, no. e-Meeting; 20210125 - 20210205, 19 January 2021 (2021-01-19), XP051971045, Retrieved from the Internet <URL:https://ftp.3gpp.org/tsg_ran/WG1_RL1/TSGR1_104-e/Docs/R1-2100574.zip R1-2100574 On UE feedback enhancements for HARQ-ACK.docx> [retrieved on 20210119]
- NEC: "UE feedback enhancements for HARQ-ACK", vol. RAN WG1, no. e-Meeting; 20210125 - 20210205, 19 January 2021 (2021-01-19), XP051971287, Retrieved from the Internet <URL:https://ftp.3gpp.org/tsg_ran/WG1_RL1/TSGR1_104-e/Docs/R1-2100948.zip R1-2100948-UE feedback enhancements for HARQ-ACK.docx> [retrieved on 20210119]
- QUALCOMM INCORPORATED: "HARQ-ACK enhancement for IOT and URLLC", vol. RAN WG1, no. e-Meeting; 20210125 - 20210205, 19 January 2021 (2021-01-19), XP051971624, Retrieved from the Internet <URL:https://ftp.3gpp.org/tsg_ran/WG1_RL1/TSGR1_104-e/Docs/R1-2101459.zip R1-2101459 HARQ-ACK enhancement for IOT and URLLC.docx> [retrieved on 20210119]
- MODERATOR (NOKIA): "Moderator summary #2 on HARQ-ACK feedback enhancements for NR Rel-17 URLLC/IIoT", vol. RAN WG1, no. e-Meeting; 20210125 - 20210205, 8 February 2021 (2021-02-08), XP051977624, Retrieved from the Internet <URL:https://ftp.3gpp.org/tsg_ran/WG1_RL1/TSGR1_104-e/Docs/R1-2101818.zip R1-2101818_Summary_[104-e-NR-IIOT_URLLC_enh-01]_HARQ _enh_v145_Moderator_eom.docx> [retrieved on 20210208]

## Description

### CROSS-REFERENCE TO RELATED APPLICATION

This application claims priority to United States Provisional Application No. 63/170959, filed April 5, 2021, and to United States Provisional Application No. 63/171535, filed April 6, 2021.

### FIELD

The present disclosure relates to wireless communications, and in particular, to PUCCH carrier switching such as, for example, HARQ based and/or associated PUCCH carrier switching.

### BACKGROUND

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, broadband communication between network nodes, such as base stations, and mobile wireless devices (WD), as well as communication between network nodes and between WDs.

The NR standard in 3GPP is designed to provide service for multiple use cases such as enhanced mobile broadband (eMBB), ultra-reliable and low latency communication (URLLC), and machine type communication (MTC). Each of these services has different technical requirements. For example, the general requirement for eMBB is high data rate with moderate latency and moderate coverage, while URLLC service requires a low latency and high reliability transmission but perhaps for moderate data rates.

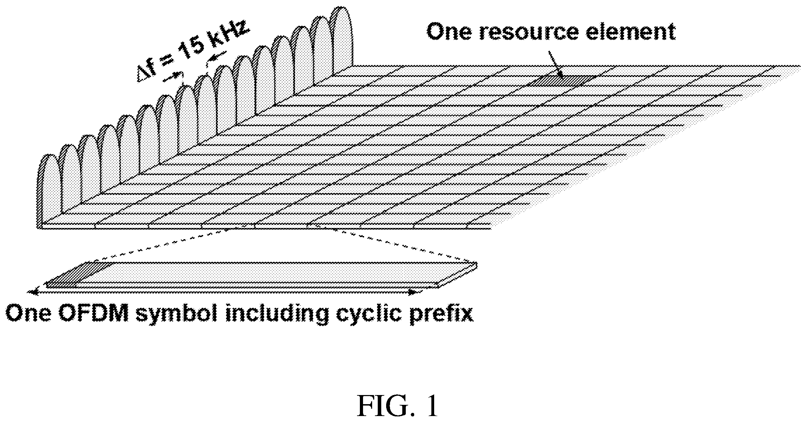

One of the solutions for low latency data transmission is shorter transmission time intervals. In NR, in addition to transmission in a slot, a mini-slot transmission is also allowed to reduce latency. A mini-slot is a concept that is used in scheduling and in downlink (DL) a min-slot can consist of 2, 4 or 7 Orthogonal Frequency Division Multiplexing (OFDM) symbols, while in uplink (UL) a mini-slot can be any number of 1 to 14 OFDM symbols. The concepts of slot and mini-slot are not specific to a specific service meaning that a mini-slot may be used for either eMBB, URLLC, or other services. FIG. 1 is a diagram of an example radio resource in NR.

### Downlink control information

In the 3GPP NR standard, downlink control information (DCI), which is transmitted in physical downlink control channel (PDCCH), is used to indicate the DL data related information, UL related information, power control information, slot format indication, etc. There are different formats of DCI associated with each of these control signals and the wireless device identifies them based on different radio network temporary identifiers (RNTIs).

The wireless device is configured by higher layer signaling to monitor for DCIs in different resources with different periodicities, etc. DCI formats 1_0, 1_1, and 1_2 are used for scheduling DL data which is sent in physical downlink shard channel (PDSCH), and includes time and frequency resources for DL transmission, as well as modulation and coding information, HARQ (hybrid automatic repeat request) information, etc.

In cases of DL semi-persistent scheduling (SPS) and UL configured grant type 2, part of the scheduling includes the periodicity is provided by the higher layer configurations, while the rest of scheduling information such as time domain and frequency domain resource allocation, modulation and coding, etc., are provided by the DCI in PDCCH.

### Uplink control information

Uplink control information (UCI) is control information sent by a wireless device to a network node. UCI may include:
Hybrid-ARQ acknowledgement (HARQ-ACK) which is feedback information corresponding to the received downlink transport block whether the transport block reception is successful or not,
Channel state information (CSI) related to downlink channel conditions which provides the network node with channel-related information useful for DL scheduling, including information for multi-antenna and beamforming schemes, and
Scheduling request (SR) which indicates a need of UL resources for UL data transmission.

UCI is typically transmitted on physical uplink control channel (PUCCH). However, if the wireless device is transmitting data on the PUSCH with a valid PUSCH resource overlapping with PUCCH, UCI can be multiplexed with UL data and transmitted on PUSCH instead, if the timeline requirements for UCI multiplexing is met.

### Physical Uplink Control Channel

Physical Uplink Control Channel (PUCCH) is used by the wireless device to a transmit HARQ-ACK feedback message corresponding to the reception of DL data transmission. It is also used by the wireless device to send channel state information (CSI) or to request for an uplink grant for transmitting UL data.

In NR, there exist multiple PUCCH formats supporting different UCI payload sizes. PUCCH formats 0 and 1 support UCI up to 2 bits, while PUCCH formats 2, 3, and 4 can support UCI of more than 2 bits. In terms of PUCCH transmission duration, PUCCH formats 0 and 2 are considered short PUCCH formats supporting PUCCH duration of 1 or 2 OFDM symbols, while PUCCH formats 1, 3 and 4 are considered as long formats and can support PUCCH duration from 4 to 14 symbols.

### HARQ feedback

An example procedure for receiving downlink transmission is that the wireless device first monitors and decodes a physical downlink control channel (PDCCH) in slot n which points to a DL data scheduled in slot n+K₀ slots (K₀ is larger than or equal to 0). The wireless device then decodes the data in the corresponding physical downlink shared channel (PDSCH). Finally, based on the outcome of the decoding, the wireless device sends an acknowledgement of the correct decoding (ACK) or a negative acknowledgement (NACK) to the network node at time slot n+ K₀+K₁ (in case of slot aggregation n+ K₀ would be replaced by the slot where PDSCH ends). Both of K₀ and K₁ are indicated in the DCI. The resources for sending the acknowledgement are indicated by PUCCH resource indicator (PRI) field in the DCI which points to one of PUCCH resources that are configured by higher layers.

Depending on DL/UL slot configurations, or whether carrier aggregation, or per codeblock group (CBG) transmission used in the DL, the feedback for several PDSCHs may need to be multiplexed in one feedback. This is performed by constructing HARQ-ACK codebooks. In NR, the wireless device can be configured to multiplex the Ack/Nack (A/N) bits using a semi-static codebook or a dynamic codebook.

Type 1 or semi-static codebook includes a bit sequence where each element contains the A/N bit from a possible allocation in a certain slot, carrier, or transport block (TB). When the wireless device is configured with a code block group (CBG) and/or time-domain resource allocation (TDRA) table with multiple entries, multiple bits are generated per slot and transport block TB (as discussed below). The codebook is derived regardless of the actual PDSCH scheduling. The size and format of the semi-static codebook is preconfigured based on the mentioned parameters. The drawback of semi-static HARQ ACK codebook is that the size is fixed, and regardless of whether there is a transmission or not, a bit is reserved in the feedback matrix.

In cases when a wireless device has a TDRA table with multiple time-domain resource allocation entries configured, the table may be pruned (i.e., entries are removed based on a specified algorithm) to derive a TDRA table that only contains non-overlapping time-domain allocations. One bit is then reserved in the HARQ CB for each non-overlapping entry (assuming a wireless device is capable of supporting reception of multiple PDSCH in a slot).

To help avoid reserving unnecessary bits in a semi-static HARQ codebook, in NR a wireless device can be configured to use a type 2 or dynamic HARQ codebook, where an A/N bit is present only if there is a corresponding transmission scheduled. To help avoid any confusion between the network node and the wireless device, on the number of PDSCHs that the wireless device has to send a feedback for, a counter downlink assignment indicator (DAI) field exists in DL assignment, which denotes an accumulative number of {serving cell, PDCCH occasion} pairs in which a PDSCH is scheduled to a wireless device up to the current PDCCH. In addition to that, there is another field called total DAI, which when present indicates the total number of {serving cell, PDCCH occasion} up to (and including) all PDCCHs of the current PDCCH monitoring occasion. The timing for sending HARQ feedback is determined based on both PDSCH transmission slot with reference to PDCCH slot (K₀) and the PUCCH slot that contains HARQ feedback (K₁).

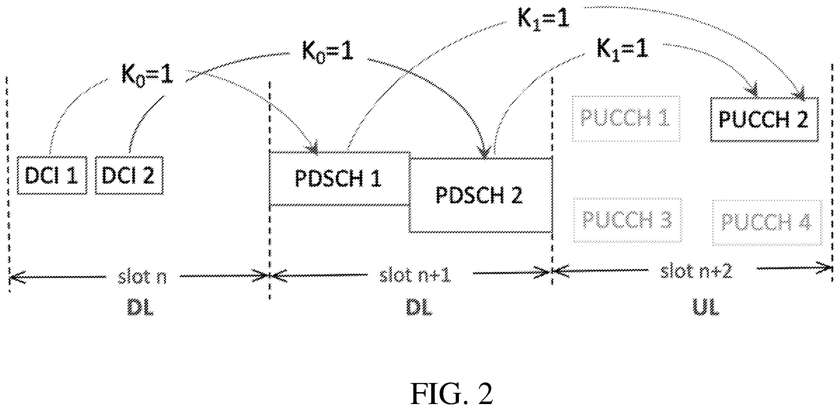

FIG. 2 illustrates the timeline in an example scenario with two PDSCHs and one feedback. In this example there is in total 4 PUCCH resources configured, and the PRI (e.g., PUCCH resource indicator) indicates PUCCH 2 to be used for HARQ feedback. The following describes how PUCCH 2 is selected from 4 PUCCH resources based on the procedure described in 3GPP standards such as in, for example, 3GPP Release 15 (Rel-15, also referred to as NR Rel-15).

In 3GPP NR Rel-15, a wireless device can be configured with maximum 4 PUCCH resource sets for transmission of HARQ-ACK information. Each set is associated with a range of UCI payload bits including HARQ-ACK bits. The first set is always associated to 1 or 2 HARQ-ACK bits and hence includes only PUCCH format 0 or 1 or both. The range of payload values (minimum of maximum values) for other sets, if configured, is provided by configuration except the maximum value for the last set where a default value is used, and the minimum value of the second set being 3. The first set can include a maximum of 32 PUCCH resources of PUCCH format 0 or 1. Other sets can include maximum 8 bits of format 2 or 3 or 4.

As previously described, the wireless device determines a slot for transmission of HARQ-ACK bits in a PUCCH corresponding to PDSCHs scheduled or activated by DCI via value provided by configuration or a field in the corresponding DCI. The wireless device forms a codebook from the HARQ-ACK bits with associated PUCCH in a same slot via corresponding values. The wireless device determines a PUCCH resource set where the size of the codebook is within the corresponding range of payload values associated to that set. The wireless device determines a PUCCH resource in that set if the set is configured with maximum 8 PUCCH resources, by a field in the last DCI associated to the corresponding PDSCHs. If the set is the first set and is configured with more than 8 resources, a PUCCH resource in that set is determined by a field in the last DCI associated to the corresponding PDSCHs and implicit rules based on the control channel element (CCE).

A PUCCH resource for HARQ-ACK transmission can overlap in time with other PUCCH resources for channel state information (CSI) and/or scheduling request (SR) transmissions as well as PUSCH transmissions in a slot. In case of overlapping PUCCH and/or PUSCH resources, first the wireless device resolves overlapping between PUCCH resources, if any, by determining a PUCCH resource carrying the total UCI (including HARQ-ACK bits) such that the UCI multiplexing timeline requirements are met. There might be partial or completely dropping of CSI bits, if any, to multiplex the UCI in the determined PUCCH resource. Then, the wireless device resolves overlapping between PUCCH and PUSCH resources, if any, by multiplexing the UCI on the PUSCH resource if the timeline requirements for UCI multiplexing are met.

### Cross-carriers HARQ-ACK feedback

In NR, when operating with carrier aggregation (CA), as a baseline, the HARQ-ACK feedback information (carried in a physical uplink control channel, PUCCH) for multiple downlink component carriers (CC) are transmitted on the primary cell (PCell). This is to support asymmetric CA with the number of downlink carriers unrelated to the number of uplink carriers.

For a large number of downlink CCs, a single uplink carrier may have to carry a large number of HARQ-ACK feedbacks. Thus, to avoid overloading a single carrier, it is possible to configure two PUCCH groups (set of serving cells) where feedbacks relating to DL transmissions in the first PUCCH group is transmitted in the uplink of the PCell within the first PUCCH group, and feedbacks relating to the other PUCCH group is transmitted on the primary second cell (PSCell) or on a PUCCH-SCell of the second PUCCH group.

It is possible to use other UL cells for HARQ-ACK feedback transmission by semistatically configuring a serving cell ID indicating a cell within the same PUCCH group to use for the HARQ-ACK transmission. However, such configuration is only possible for a newly added SCell. That is, for DL transmission on a PCell, HARQ-ACK transmission is only possible on the PCell.

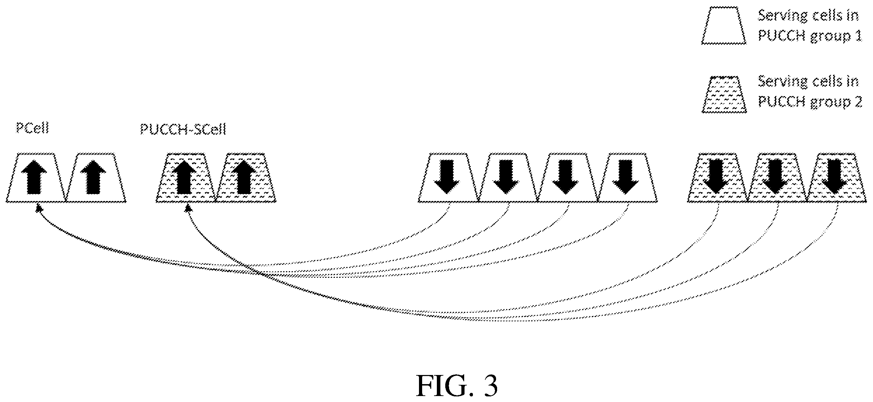

FIG. 3 is a diagram of an example of a HARQ-ACK feedback transmission mechanism with two PUCCH groups, in which the HARQ-ACK feedback for the first 4 DL CCs is transmitted in the UL PCell in the corresponding PUCCH group and the feedback for the last 3 DL CCs is transmitted in the PUCCH-SCell of the second PUCCH group.

As used herein, the term "carrier" and "cell" are used interchangeably and understood to have a similar meaning.

### PUCCH carrier switching

Different methods for PUCCH carrier switching have been discussed. They may be classified into two example approaches, namely dynamic carrier switching and semi-static switching. The dynamic approach includes having a dynamic indication from the network node, e.g., in the form of dedicate indication field in the DCI, while the semi-static approach may rely on some semi-static rule or semi-static reconfiguration.

### SPS (e.g., semi-persistent scheduling) HARQ-ACK deferral

A wireless device can be indicated or configured with the HARQ-ACK timing value, such as with K₁, for a SPS configuration. This HARQ-ACK timing value is applied to all SPS PDSCH occasions of the activated SPS configuration.

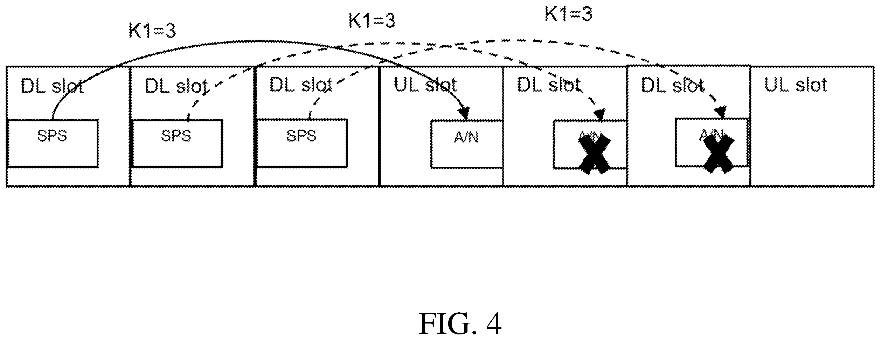

In TDD operation with asymmetric DL/UL TDD pattern, if short SPS periodicity is used, it can happen that the SPS periodicity value does not match with the TDD pattern, when it comes to HARQ-ACK feedback timing. It may happen that the HARQ-ACK timing value does not indicate a valid UL slot for all SPS PDSCH occasions. This is illustrated in FIG. 4 with a single SPS configuration with periodicity of 1 slot where the indicated does not match with the 'DDDU' semi-static TDD pattern, i.e., where would occur mismatch of SPS periodicity and TDD pattern. In the TDD pattern, "D" indicates downlink and "U" indicates uplink. With *K₁* =3 slots, HARQ-ACK feedback for the second and third SPS occasions would fall into DL slots, and thus these HARQ-ACK would be dropped.

It has been proposed to attempt to solve above issue by allowing SPS HARQ-ACK, which would otherwise be dropped, to be deferred to a next available UL slot instead, as described in 3GPP.

### Downlink assignment index (DAI)

There are two type of DAIs that can be signaled in DCI. The DAI is used so the wireless device can detect missed PDCCH transmissions scheduling PDSCH reception, SPS PDSCH release, or SCell dormancy indication. The signaled DAIs are then used to construct a Type-2 HARQ codebook containing detected PDSCH receptions, SPS PDSCH releases and SCell dormancy indications. There are two types of DAI, a counter DAI that is increased for each PDCCH containing a PDSCH reception, SPS PDSCH release or SCell dormancy indication, and a total DAI that denotes the total number of such PDCCHs transmitted to the wireless device up to the current PDCCH monitoring occasion.

However, the existing behavior of HARQ-ACK feedbacks is too restrictive in some scenarios, especially when the delay of HARQ-ACK transmission is of very high importance. For example, the PCell or PUCCH-SCell or the configured UL cell for HARQ-ACK may not have a TDD pattern suitable for fast HARQ-ACK feedback and thus causing a delay bottleneck for the overall DL transmission. Allowing PUCCH carrier switching can then be useful to address such issue, but it is not clear how to support PUCCH carrier switching. In addition, when supported, there will be impacts on different aspects such as HARQ-ACK codebook that need to be resolved.

Existing methods are disclosed in MEDIATEK INC: "On UE feedback enhancements for HARQ-ACK",3GPP DRAFT; R1-2100574, 19 January 2021, NEC: "UE feedback enhancements for HARQ-ACK", 3GPP DRAFT; R1-2100948 19 January 2021, QUALCOMM INCORPORATED: "HARQ-ACK enhancement for IOT and URLLC", 3GPP DRAFT; R1-2101459, 19 January 2021, and MODERATOR (NOKIA): "Moderator summary #2 on HARQ-ACK feedback enhancements for NR Rel-17 URLLC/ IIoT", 3GPP DRAFT; R1-2101818, 8 February 2021.

### SUMMARY

The invention is defined by the appended claims.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a block diagram of a radio resource in NR;
FIG. 2 is a diagram of an example of a transmission timeline;
FIG. 3 is a diagram of two PUCCH groups where HARQ-ACK feedback transmission are transmitted on PCell or PUCCH-SCell of the corresponding PUCCH group;
FIG. 4 is a diagram of a mismatch of SPS periodicity and TDD pattern with indicated K1;
FIG. 5 is a schematic diagram of an example network architecture illustrating a communication system connected via an intermediate network to a host computer according to the principles in the present disclosure;
FIG. 6 is a block diagram of a host computer communicating via a network node with a wireless device over an at least partially wireless connection according to some embodiments of the present disclosure;
FIG. 7 is a flowchart illustrating example methods implemented in a communication system including a host computer, a network node and a wireless device for executing a client application at a wireless device according to some embodiments of the present disclosure;
FIG. 8 is a flowchart illustrating example methods implemented in a communication system including a host computer, a network node and a wireless device for receiving user data at a wireless device according to some embodiments of the present disclosure;
FIG. 9 is a flowchart illustrating example methods implemented in a communication system including a host computer, a network node and a wireless device for receiving user data from the wireless device at a host computer according to some embodiments of the present disclosure;
FIG. 10 is a flowchart illustrating example methods implemented in a communication system including a host computer, a network node and a wireless device for receiving user data at a host computer according to some embodiments of the present disclosure;
FIG. 11 is a flowchart of an example process in a network node according to some embodiments of the present disclosure;
FIG. 12 is a flowchart of another example process in a network node according to some embodiments of the present disclosure;
FIG. 13 is a flowchart of an example process in a wireless device according to some embodiments of the present disclosure; and
FIG. 14 is a flowchart of another example process in a wireless device according to some embodiments of the present disclosure.

### DETAILED DESCRIPTION

Before describing in detail example embodiments, it is noted that the embodiments reside primarily in combinations of apparatus components and processing steps related to PUCCH carrier switching such as, for example, HARQ based PUCCH carrier switching. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

In some embodiments, the phrase at least one of A and B corresponds to A and/or B.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

One or more embodiments detailed in the present disclosure are described in general and can be applied to both slot-based PUCCH and sub-slot based PUCCH configuration. It applies to both HARQ-ACK feedback of dynamically scheduled PDSCH and that of DL SPS.

The term "carrier" and "cell" are used with similar meanings in the context of the present disclosure.

Transmitting in downlink may pertain to transmission from the network or network node to the wireless device. Transmitting in uplink may pertain to transmission from the wireless device to the network or network node. Transmitting in sidelink may pertain to (direct) transmission from one wireless device to another. Uplink, downlink and sidelink (e.g., sidelink transmission and reception) may be considered communication directions. In some variants, uplink and downlink may also be used to described wireless communication between network nodes, e.g. for wireless backhaul and/or relay communication and/or (wireless) network communication for example between base stations or similar network nodes, in particular communication terminating at such. It may be considered that backhaul and/or relay communication and/or network communication is implemented as a form of sidelink or uplink communication or similar thereto.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments provide PUCCH carrier switching such as, for example, HARQ based PUCCH carrier switching.

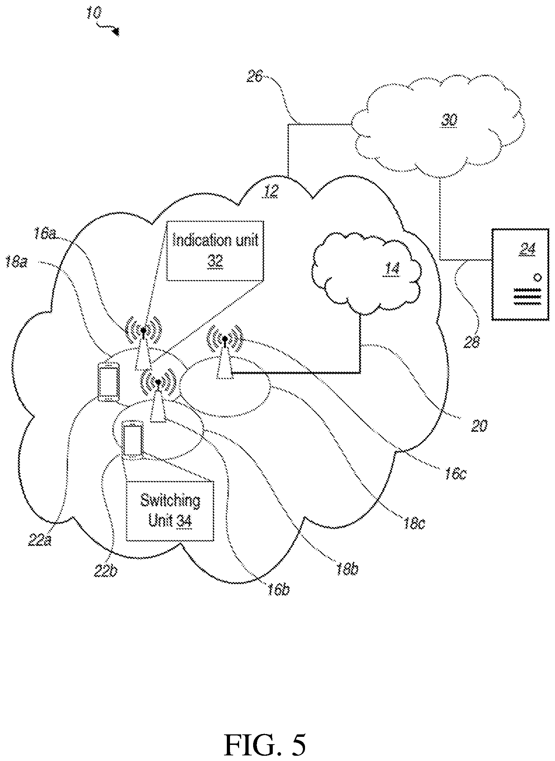

Referring again to the drawing figures, in which like elements are referred to by like reference numerals, there is shown in FIG. 5 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloudimplemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 5 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include an indication unit 32 which is configured to perform one or more network node 16 functions as described herein such as with respect to PUCCH carrier switching such as, for example, HARQ based PUCCH carrier switching. A wireless device 22 is configured to include a switching unit 34 which is configured to perform one or more wireless device 22 functions as described herein such as with respect to PUCCH carrier switching such as, for example, HARQ based PUCCH carrier switching.

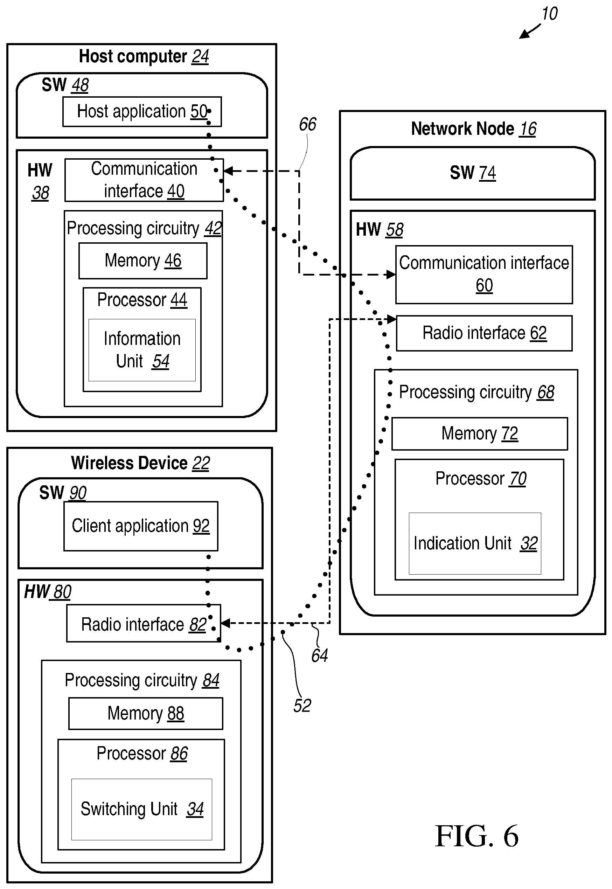

Example implementations, in accordance with an embodiment, of the WD 22, network node 16 and host computer 24 discussed in the preceding paragraphs will now be described with reference to FIG. 6. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and or the wireless device 22. The processing circuitry 42 of the host computer 24 may include an information unit 54 configured to enable the service provider to analyze, store, forward, relay, transmit, receive, determine, configure, etc., information related to PUCCH carrier switching such as, for example, HARQ based PUCCH carrier switching.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include indication unit 32 configured to perform one or more network node 16 functions as described herein such as with respect to PUCCH carrier switching such as, for example, HARQ based PUCCH carrier switching.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include a switching unit 34 configured to perform one or more wireless device 22 functions as described herein such as with respect to PUCCH carrier switching such as, for example, HARQ based PUCCH carrier switching.

In some embodiments, the inner workings of the network node 16, WD 22, and host computer 24 may be as shown in FIG. 6 and independently, the surrounding network topology may be that of FIG. 5.

In FIG. 6, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors, etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 5 and 6 show various "units" such as indication unit 32, and switching unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

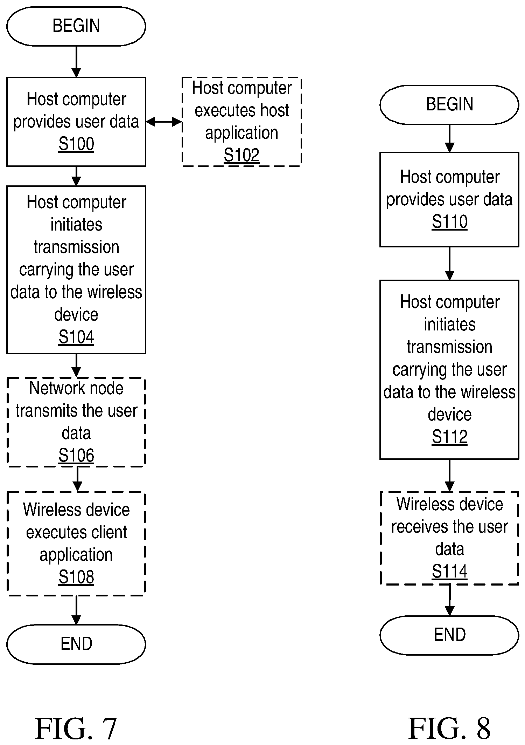

FIG. 7 is a flowchart illustrating an example method implemented in a communication system, such as, for example, the communication system of FIGS. 5 and 6, in accordance with one embodiment. The communication system may include a host computer 24, a network node 16 and a WD 22, which may be those described with reference to FIG. 6. In a first step of the method, the host computer 24 provides user data (Block S100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 8 is a flowchart illustrating an example method implemented in a communication system, such as, for example, the communication system of FIG. 5, in accordance with one embodiment. The communication system may include a host computer 24, a network node 16 and a WD 22, which may be those described with reference to FIGS. 5 and 6. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

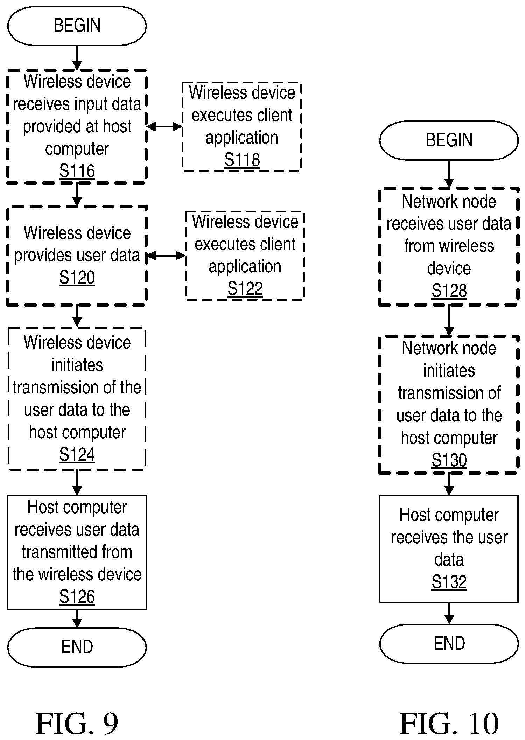

FIG. 9 is a flowchart illustrating an example method implemented in a communication system, such as, for example, the communication system of FIG. 5, in accordance with one embodiment. The communication system may include a host computer 24, a network node 16 and a WD 22, which may be those described with reference to FIGS. 5 and 6. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 10 is a flowchart illustrating an example method implemented in a communication system, such as, for example, the communication system of FIG. 5, in accordance with one embodiment. The communication system may include a host computer 24, a network node 16 and a WD 22, which may be those described with reference to FIGS. 5 and 6. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

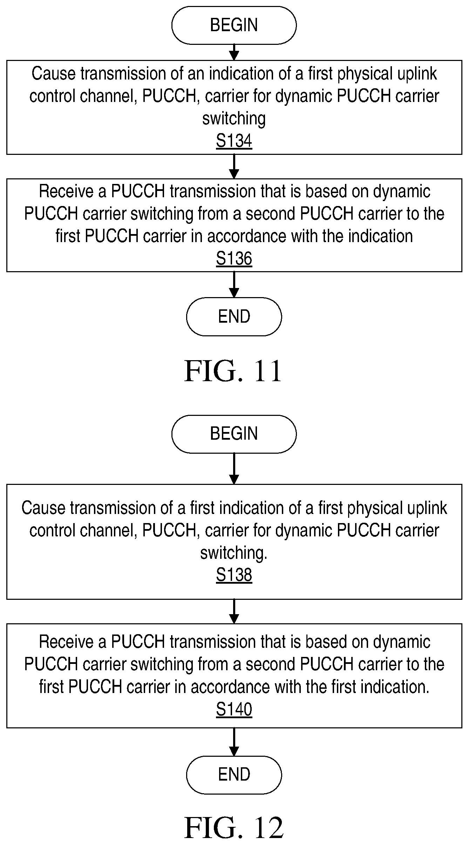

FIG. 11 is a flowchart of an example process in a network node 16 according to some embodiments of the present disclosure. One or more blocks described herein may be performed by one or more elements of network node 16 such as by one or more of processing circuitry 68 (including the indication unit 32), processor 70, radio interface 62 and/or communication interface 60. Network node 16 is configured to cause (Block S134) transmission of an indication of a first physical uplink control channel, PUCCH, carrier for dynamic PUCCH carrier switching, as described herein. The network node 16 is configured to receive (Block S136) a PUCCH transmission that is based on dynamic PUCCH carrier switching from a second PUCCH carrier to the first PUCCH carrier in accordance with the indication, as described herein.

According to one or more embodiments, the indication is one of: a downlink assignment index, DAI, associated with the first PUCCH carrier; downlink semi-persistent scheduling, DL SPS, configuration associated with the first PUCCH carrier; multiple PUCCH carrier indication for SPS hybrid automatic repeat request-acknowledgement, HARQ-ACK, that is provided in one of an activation downlink control information, DCI and bitmap of PUCCH carrier indices, and an activation DCI for indicating one of a plurality of sequences for PUCCH carrier indices to select where the plurality of sequences being configured via radio resource control, RRC, signaling, as described herein. According to one or more embodiments, the processing circuitry 68 is further configured to cause transmission of an indication that a semi-persistent scheduling, SPS, hybrid automatic repeat request-acknowledgement, HARQ-ACK, deferral is enabled for the second PUCCH carrier where the dynamic PUCCH carrier switching is performed instead of the SPS HARQ-ACK deferral, as described herein.

According to one or more embodiments, the dynamic PUCCH carrier switching is based at least on a physical downlink shared channel, PDSCH,-to- hybrid automatic repeat request-acknowledgement, HARQ, feedback timing indicator. According to one or more embodiments, the PDSCH-to-HARQ feedback timing indicator one of indicates a HARQ-ACK timing value with respect to one of a default PUCCH carrier and other PUCCH carrier, indicates an invalid slot for PUCCH transmission, the processing circuitry is further configured to receive the PUCCH transmission on a PUCCH carrier with a lowest carrier index of a plurality of valid PUCCH carriers, receive the PUCCH transmission on a PUCCH carrier with a highest carrier index of the plurality of valid PUCCH carriers, and receive the PUCCH transmission on a first listed PUCCH carrier of the plurality of valid PUCCH carriers, and takes into account different subcarrier spacing, SCS, among downlink, DL, and uplink, UL, carriers. According to one or more embodiments, the dynamic PUCCH carrier switching is performed with simultaneous PUCCH and physical uplink shared channel, PUSCH, transmissions.

FIG. 12 is a flowchart of another example process in a network node 16 according to some embodiments of the present disclosure. One or more blocks described herein may be performed by one or more elements of network node 16 such as by one or more of processing circuitry 68 (including the indication unit 32), processor 70, radio interface 62 and/or communication interface 60. Network node 16 is configured to cause transmission (S138) of a first indication of a first physical uplink control channel, PUCCH, carrier for dynamic PUCCH carrier switching, as described herein. The network node 16 is configured to receive (S140) a PUCCH transmission that is based on dynamic PUCCH carrier switching from a second PUCCH carrier to the first PUCCH carrier in accordance with the first indication, as described herein.

According to one or more embodiments, the first indication is one of a downlink assignment index, DAI, associated with the first PUCCH carrier, a downlink semi-persistent scheduling, DL SPS, configuration associated with the first PUCCH carrier, a multiple PUCCH carrier indication for SPS hybrid automatic repeat request-acknowledgement, HARQ-ACK, that is provided in one of an activation downlink control information, DCI, a bitmap of PUCCH carrier indices, and an activation DCI for indicating one of a plurality of sequences for PUCCH carrier indices to select, where the plurality of sequences is configured via radio resource control, RRC, signaling.

According to one or more embodiments, the network node 16 is further configured to cause transmission of a second indication that a semi-persistent scheduling, SPS, hybrid automatic repeat request-acknowledgement, HARQ-ACK, deferral is enabled for the second PUCCH carrier, where the dynamic PUCCH carrier switching is performed instead of the SPS HARQ-ACK deferral.

According to one or more embodiments, the dynamic PUCCH carrier switching is based at least on a physical downlink shared channel, PDSCH,-to- hybrid automatic repeat request-acknowledgement, HARQ, feedback timing indicator.

According to one or more embodiments, the PDSCH-to-HARQ feedback timing indicator one of indicates a HARQ-ACK timing value with respect to one of a default PUCCH carrier and other PUCCH carrier, and indicates an invalid slot for PUCCH transmission.

According to one or more embodiments, the network node 16 is further configured to receive the PUCCH transmission on a PUCCH carrier with a lowest carrier index of a plurality of valid PUCCH carriers based on the PDSCH-to-HARQ feedback timing indicator, receive the PUCCH transmission on a PUCCH carrier with a highest carrier index of the plurality of valid PUCCH carriers based on the PDSCH-to-HARQ feedback timing indicator, and receive the PUCCH transmission on a first listed PUCCH carrier of the plurality of valid PUCCH carriers.

According to one or more embodiments, the network node 16 is further configured to receive a transmission of hybrid automatic repeat request-acknowledgement, HARQ-ACK on the first PUCCH carrier, the transmission being based on a power control command associated with the second PUCCH carrier.

According to one or more embodiments, the network node 16 is further configured to transmit to the wireless device an activation downlink control information, DCI, message associated with a physical downlink shared channel, PDSCH, associated with the HARQ-ACK, the DCI message including the power control command.

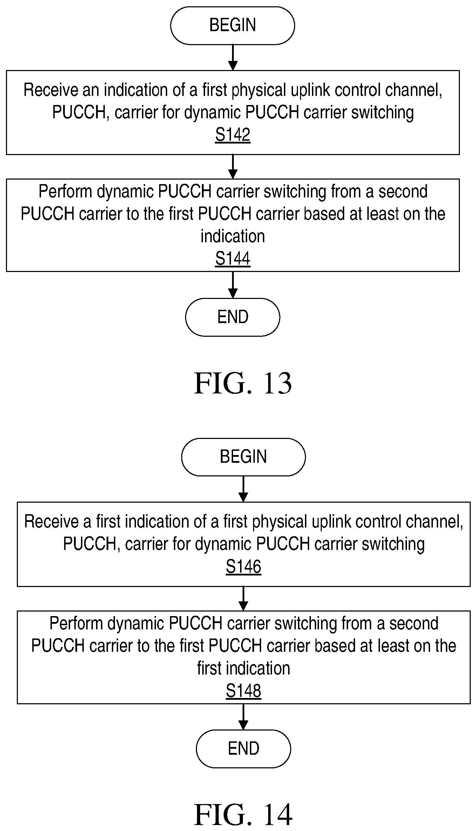

FIG. 13 is a flowchart of an example process in a wireless device 22 according to some embodiments of the present disclosure. One or more blocks described herein may be performed by one or more elements of wireless device 22 such as by one or more of processing circuitry 84 (including the switching unit 34), processor 86, radio interface 82 and/or communication interface 60. Wireless device 22 is configured to receive (Block S140) an indication of a first physical uplink control channel, PUCCH, carrier for dynamic PUCCH carrier switching, as described herein. Wireless device 22 is configured to perform (Block S142) dynamic PUCCH carrier switching from a second PUCCH carrier to the first PUCCH carrier based at least on the indication, as described herein.

According to one or more embodiments, the indication is one of: a downlink assignment index, DAI, associated with the first PUCCH carrier, downlink semi-persistent scheduling, DL SPS, configuration associated with the first PUCCH carrier, multiple PUCCH carrier indication for SPS hybrid automatic repeat request-acknowledgement, HARQ-ACK, that is provided in one of: an activation downlink control information, DCI, bitmap of PUCCH carrier indices, and an activation DCI for indicating one of a plurality of sequences for PUCCH carrier indices to select, the plurality of sequences being configured via radio resource control, RRC, signaling. According to one or more embodiments, the processing circuitry is further configured to receive an indication that a semi-persistent scheduling, SPS, hybrid automatic repeat request-acknowledgement, HARQ-ACK, deferral is enabled for the second PUCCH carrier, the dynamic PUCCH carrier switching being performed instead of the SPS HARQ-ACK deferral.

According to one or more embodiments, the dynamic PUCCH carrier switching is based at least on a physical downlink shared channel, PDSCH,-to- hybrid automatic repeat request-acknowledgement, HARQ, feedback timing indicator. According to one or more embodiments, the PDSCH-to-HARQ feedback timing indicator one of: indicates a HARQ-ACK timing value with respect to one of a default PUCCH carrier and other PUCCH carrier, indicates an invalid slot for PUCCH transmission, the processing circuitry is further configured to cause PUCCH transmission on a PUCCH carrier with a lowest carrier index of a plurality of valid PUCCH carriers, cause PUCCH transmission on a PUCCH carrier with a highest carrier index of the plurality of valid PUCCH carriers, cause PUCCH transmission on a first listed PUCCH carrier of the plurality of valid PUCCH carriers, and takes into account different subcarrier spacing, SCS, among downlink, DL, and uplink, UL, carriers. According to one or more embodiments, the dynamic PUCCH carrier switching is performed with simultaneous PUCCH and physical uplink shared channel, transmissions.

FIG. 14 is a flowchart of another example process in a wireless device 22 according to some embodiments of the present disclosure. One or more blocks described herein may be performed by one or more elements of wireless device 22 such as by one or more of processing circuitry 84 (including the switching unit 34), processor 86, radio interface 82 and/or communication interface 60. Wireless device 22 is configured to receive (Block S146) a first indication of a first physical uplink control channel, PUCCH, carrier for dynamic PUCCH carrier switching, as described herein. Wireless device 22 is configured to perform (Block S148) dynamic PUCCH carrier switching from a second PUCCH carrier to the first PUCCH carrier based at least on the first indication, as described herein.

According to one or more embodiments, the first indication is one of a downlink assignment index, DAI, associated with the first PUCCH carrier, a downlink semi-persistent scheduling, DL SPS, configuration associated with the first PUCCH carrier, a multiple PUCCH carrier indication for SPS hybrid automatic repeat request-acknowledgement, HARQ-ACK, that is provided in one of an activation downlink control information, DCI; and a bitmap of PUCCH carrier indices, and an activation DCI for indicating one of a plurality of sequences for PUCCH carrier indices to select, where the plurality of sequences is configured via radio resource control, RRC, signaling.

According to one or more embodiments, wireless device 22 receives a second indication that a semi-persistent scheduling, SPS, hybrid automatic repeat request-acknowledgement, HARQ-ACK, deferral is enabled for the second PUCCH carrier, where the dynamic PUCCH carrier switching is performed instead of the SPS HARQ-ACK deferral.

According to one or more embodiments, the dynamic PUCCH carrier switching is based at least on a physical downlink shared channel, PDSCH,-to- hybrid automatic repeat request-acknowledgement, HARQ, feedback timing indicator.

According to one or more embodiments, the PDSCH-to-HARQ feedback timing indicator one of indicates a HARQ-ACK timing value with respect to one of a default PUCCH carrier and other PUCCH carrier, and indicates an invalid slot for PUCCH transmission; and the wireless device 22 is further configured to at least one of cause PUCCH transmission on a PUCCH carrier with a lowest carrier index of a plurality of valid PUCCH carriers based on the PDSCH-to-HARQ feedback timing indicator, cause PUCCH transmission on a PUCCH carrier with a highest carrier index of the plurality of valid PUCCH carriers based on the PDSCH-to-HARQ feedback timing indicator, and cause PUCCH transmission on a first listed PUCCH carrier of the plurality of valid PUCCH carriers based on the PDSCH-to-HARQ feedback timing indicator.

According to one or more embodiments, the dynamic PUCCH carrier switching is performed with simultaneous PUCCH and physical uplink shared channel, PUSCH, transmissions.

According to one or more embodiments, the wireless device 22 is further configured to cause a transmission of hybrid automatic repeat request-acknowledgement, HARQ-ACK on the first PUCCH carrier, where the transmission is based on a power control command associated with the second PUCCH carrier.

According to one or more embodiments, the wireless device 22 is further configured to receive an activation downlink control information, DCI, message, the activation DCI message including the power control command and being associated with a physical downlink shared channel, PDSCH, associated with the HARQ-ACK.

Having generally described arrangements for PUCCH carrier switching such as, for example, HARQ based PUCCH carrier switching, details for these arrangements, functions and processes are provided as follows, and which may be implemented by the network node 16, wireless device 22 and/or host computer 24.

Some embodiments provide for PUCCH carrier switching such as, for example, HARQ based PUCCH carrier switching. A person skilled in the art realizes that other combining embodiments and/or variants are possible in view of the teachings herein. One or more network node 16 functions described below may be performed by one or more of processing circuitry 68, processor 70, radio interface 62, indication unit 32, etc. One or more wireless device 22 functions described below may be performed by one or more of processing circuitry 84, processor 86, radio interface 82, switching unit 34, etc.

### Type-2 HARQ-ACK codebook for dynamic PUCCH carrier switching

For Type-2 HARQ-ACK codebook, the wireless device 22 is provided downlink assignment index (DAI), e.g., counter DAI and total DAI in the DCI scheduling PDSCHs, by network node 16. DAI is used to keep track of the transmitted PDSCHs so that the wireless device 22 can adjust the codebook size correctly even if some of the DCI scheduling those PDSCHs are not received by the wireless device 22.

One or more of the following embodiments relate to solutions to support Type-2 HARQ-ACK codebook in the scenario where dynamic PUCCH carrier switching is enabled such as, for example, at wireless device 22. In one non-limiting embodiment, a wireless device 22 is provided with downlink assignment index (DAI), e.g., counter DAI and total DAI separately for each PUCCH carrier. In one non-limiting embodiment, the downlink assignment index is associated with a particular PUCCH carrier based on a combination of field(s) indicating the PUCCH carrier and the existing downlink assignment index field in a DCI scheduling PDSCH. In one non-limiting embodiment, a downlink assignment index field in the DCI scheduling PDSCH also includes information about a particular PUCCH carrier with which the downlink assignment index is associated.

In one non-limiting embodiment, Enhanced type-2 HARQ-ACK codebook can be used as follows. In Enhanced Type-2 codebook, a scheduled PDSCH is assigned to a PDSCH group among two PDSCH groups with corresponding downlink assignment index. The framework can be used when there are two carriers to switch between for carrying the HARQ-ACK feedback of the scheduled PDSCHs in a PUCCH group, where each PDSCHs group is associated to one PUCCH carrier, e.g., PDSCH group 1 and 2 are associated to PUCCH carrier 1 and 2, respectively. In this case, when HARQ-ACK feedback for first or second PDSCH group is requested, it would be expected on the 1^{st} PUCCH carrier or on the 2^{nd}, respectively.

The method can be extended to more than two groups by extending the number of bits in the corresponding field in DCI to indicate more than one group and to DCI 1_2 by including the corresponding fields for Enhanced-Type 2 codebooks in DCI 1_2, similarly to DCI 1_1 in 3GPP Rel-16.

### PUCCH carrier switching for SPS HARQ-ACK

In a non-limiting embodiment, a DL SPS by configuration is associated to a PUCCH carrier in a PUCCH group.

In another non-limiting embodiment, a rule for association of a DL SPS configuration to a PUCCH carrier in a PUCCH group is used. In one or more embodiments, the wireless device 22 applies the rule for determining the association. Some examples of the rules are listed below:
Rule based on DL SPS configuration ID and PUCCH carriers:
For example, in case of two PUCCH carriers, DL SPS configurations with even and old IDs are associated to the first and second PUCCH carrier, respectively,
In another example, for N PUCCH carriers, M DL SPS configurations are portioned into min(N,M) groups based on ascending/descending order of DL SPS IDs. For example, in case of two PUCCH carriers and 3 DL SPS configurations, 1^{st} and 2^{nd} DL SPS are associated to 1^{st} carrier, and 3^{rd} DL SPS to the second carrier. Alternatively, 1^{st} DL SPS is associated to the 1^{st} carrier and 2^{nd} and 3^{rd} DL SPS associated to the second carrier. Another variation is presented in Table 2 below.

Rules based on SCS of DL SPS configuration. Some examples are provided below.

DL SPS configured on a bandwidth part (BWP) with a SCS larger or equal than the SCS of PUCCH carrier is associated to that PUCCH carrier, starting with PUCCH carrier with largest SCS.

In one non-limiting embodiment, multiple PUCCH carrier indication indices are provided by network node 16 to the wireless device 22 for PUCCH carrier switching for SPS HARQ-ACK. In one non-limiting embodiment, multiple PUCCH carrier indication for PUCCH carrier switching for SPS HARQ-ACK are provided in the activation DCI that is transmitted to the wireless device 22. In one non-limiting embodiment, multiple PUCCH carrier indication indices are provided as a bitmap/sequence of PUCCH carrier indices, where the first value of the sequence corresponds to a PUCCH carrier indicator of SPS HARQ-ACK corresponding to the first SPS occasion after activation, and the second value of the sequence corresponds to a PUCCH carrier indicator of SPS HARQ-ACK corresponding to the second SPS occasion after activation, and so on. The values in the sequence are cycled through for further SPS occasions.

For example, if a sequence of PUCCH carrier indication indices {0, 1, 2} is provided to the wireless device 22, then HARQ-ACK corresponding to the first, second, and third SPS PDSCHs after activation are transmitted on carrier index #0, #1, and #2, respectively, and HARQ-ACK corresponding to the fourth, fifth, and sixth SPS PDSCHs after activation are transmitted on carrier index #0, #1, and #2, and so on.

In one non-limiting embodiment, a wireless device 22 is configured by RRC multiple sequences for PUCCH carrier indices for SPS HARQ-ACK and is indicated in the activation DCI by an indicator indicating a specific sequence to use. In a special case, a sequence of PUCCH carrier indices has length 1.

For example, a wireless device 22 is configured with 4 sequences of PUCCH carrier indication indices as shown in Table 1.

**Table 1: PUCCH carrier indicator maps to PUCCH carrier indices in RRC configured**

| PUCCH carrier indicator | PUCCH carrier indices |
|---|---|
| 00 | {0,1,2} |
| 01 | {0,1} |
| 10 | {0} |
| 11 | {1} |

If the wireless device 22 is indicated with '00' in the activation DCI, then HARQ-ACK corresponding to the first, second, and third SPS PDSCHs after activation are transmitted on carrier index #0, #1, and #2, respectively, and HARQ-ACK corresponding to the fourth, fifth, and sixth SPS PDSCHs after activation are transmitted on carrier index #0, #1, and #2, and so on.

If wireless device 22 is indicated with "10" in the activation DCI, then HARQ-ACK corresponding to all SPS PDSCH occasions are transmitted on carrier index #0.

In one version, the sequence to use is determined based on at least one or more of the following:
The value indicated in the activation DCI; and
The K0 value indicated in the activation DCI.

### PUCCH carrier switching for SPS HARQ-ACK when SPS HARQ-ACK deferral is enabled

In one non-limiting embodiment, SPS HARQ-ACK deferral is enabled or disabled per PUCCH carrier.

In one non-limiting embodiment, when SPS HARQ-ACK deferral is enabled at wireless device 22 for a first PUCCH carrier, SPS HARQ-ACK on the first PUCCH carrier which would be deferred to the next available UL on the carrier can be switched to/transmitted instead on a second (another) PUCCH carrier if one or more of the following conditions are met:

there exists an UL slot or a special slot with valid symbols for UL transmission on the second PUCCH carrier, which starts earlier than the UL slot in which the SPS HARQ-ACK would be deferred to the first PUCCH carrier,

the wireless device 22 is indicated with a PUCCH carrier indicator to use for the second PUCCH carrier for the SPS HARQ-ACK.

### PUCCH carrier switching based on one or more rules

### PUCCH carrier switching rules based on indicated PDSCH-to-HARQ_feedback timing indicator (K1)

Point/item 1. In one non-limiting embodiment, the PDSCH-to-HARQ_feedback timing indicator (K1) in the DCI scheduling PDSCH indicates the HARQ-ACK timing (K1) value with respect to the default PUCCH carrier, e.g., PCell of a PUCCH group.

Point/item 2. In the above embodiment, if the indicated K1 value does not indicate a valid slot (e.g., a "D" slot in a TDD pattern is indicated for uplink transmission) for PUCCH transmission, the wireless device 22 can transmit PUCCH on another PUCCH carrier that has a valid slot for PUCCH transmission with respect to the indicated value instead. If there are multiple such carriers, called "valid carriers", the wireless device 22 can perform one of the following:
PUCCH is transmitted on the carrier with the lowest carrier index among the valid carriers;
PUCCH is transmitted on the carrier with the highest carrier index among the carriers; and
PUCCH is transmitted on the first carrier in the list of the valid carriers.

Point/item 3. In one non-limiting embodiment, the PDSCH-to-HARQ_feedback timing indicator (K1) in the DCI scheduling PDSCH indicates the HARQ-ACK timing (K1) value with respect to the PUCCH carrier to be used, e.g., another carrier other than the default PUCCH carrier.
- In one version of the above embodiment, the wireless device 22 transmits HARQ-ACK corresponding to PDSCH on a PUCCH carrier which has a valid slot for PUCCH transmission corresponding to the indicated value. If there are multiple such carriers, called "valid carriers", the wireless device 22 can perform one of the following:
   PUCCH is transmitted on the carrier with the lowest carrier index among the valid carriers;
   PUCCH is transmitted on the carrier with the highest carrier index among the carriers; and
   PUCCH is transmitted on the first carrier in the list of the valid carriers.
- In another version of the above embodiment, the wireless device 22 transmits HARQ-ACK corresponding to PDSCH on a PUCCH carrier which has a valid slot for PUCCH transmission corresponding to a smallest K1*, where K1*> the indicated K1. If there are multiple such carriers, called "valid carriers", the wireless device 22 can perform one of the following:
   PUCCH is transmitted on the carrier with the lowest carrier index among the valid carriers;
   PUCCH is transmitted on the carrier with the highest carrier index among the carriers; and
   PUCCH is transmitted on the first carrier in the list of the valid carriers.

Point/item 4. In the above embodiments, the selection of PUCCH carrier based on the indication considers different SCS among DL and UL carriers.

Point/item 5. In another non-limiting embodiment, a rule for associating a PDSCH to a PUCCH carrier in a PUCCH group is used such as by, for example, wireless device 22. Some examples of the rules are listed below:
Rule based on the PDSCH cell index and PUCCH carrier index:
For example, in case of two PUCCH carriers, DL cell indices with even and old indices are associated to first and second PUCCH carrier, respectively,
In another example, for N PUCCH carriers, M DL cells are portioned into min(N,M) groups based on ascending/descending order of DL cell indices. For example, in case of two PUCCH carriers and 3 DL cells, 1^{st} and 2^{nd} DL cells are associated to 1^{st} carrier, and 3^{rd} DL cell to the second PUCCH carrier. Alternatively, 1^{st} DL cell is associated to the 1^{st} carrier and 2^{nd} and 3^{rd} DL cells associated to the second carrier.

Rules based on SCS of PDSCH and SCS of PUCCH carriers. Some examples are provided below.

DL cells configured with a SCS larger or equal than the SCS of PUCCH carrier is associated to that PUCCH carrier, starting with PUCCH carrier with largest SCS.

Point/item 6. In another non-limiting embodiment, the impact of channel occupancy time (COT) (FBE, e.g., frame based equipment) is considered. The COT is channel occupancy time in NR-U (NR-unlicensed). If the COT is not grabbed (or cancelled/not allowed, e.g., due listen before talk (LBT) failure at COT initiation) whether in case of network node 16-COT or wireless device 22-COT, then wireless device 22 uses PUCCH (switch carrier), e.g., based on one or more of the above non-limiting rules/embodiments, conditioned, and/or it ignores the PUCCH resource which is part of non-grabbed (noninitiated) COT. An example of option depicted in point/item 2 above. It is assumed that wireless device 22 has currently both network node 16-COT and wireless device 22-COT configured. It is assumed that rule "PUCCH is transmitted on the carrier with the highest carrier index among the carriers" (2nd depicted bullet under point 2) is used. It is assumed that wireless device 22 has PUCCH resources in non-overlapping network node 16-COT and wireless device 22-COT where in network node 16-COT, PUCCH resources are part of higher carrier index, and in wireless device 22-COT, the PUCCH is a part of relatively lower carrier index. If both network node 16-COT and wireless device 22-COT are grabbed, according to rule, wireless device 22 utilizes PUCCH resources from network node 16-COT. If network node 16-COT is grabbed/initiated but wireless device 22-COT is not, then according to the rule, wireless device 22 transmits over PUCCH in network node 16-COT, and if wireless device 22-COT is grabbed/initiated but network node 16-COT not, then according to the rule, wireless device 22 transmits over PUCCH in wireless device 22-COT. In summary, whatever the one or more rules are described above for PUCCH/carrier switching, those carriers will be ignored which are part COTs which are not grabbed/initialized as wireless device 22 is not allowed to transmit in non-grabbed/non-initialized COTs. Note, the network node 16-COT is initialized by the network node 16 and wireless device 22-COT is initialized by the wireless device 22, where both COT types and resources in the COTs are configured by network node 16.

Point/item 7. In one non-limiting embodiment, the associated PUCCH carriers (for switching purpose, e.g., for transmitting deferred HARQ.ACK) can have range of values (carrier indices) for a given SPS ID. For this an RRC table can be created with 3 columns, where first column denotes the row index, in 2^{nd} column, for each row index, it contains an SPS ID or group of SPS IDs, and in 3^{rd} column, it contains associated PUCCH carriers indices, as illustrated in Table 2. In DCI, a 3 bit field can indicate a desired index which can activate the associated SPS IDs for indicated PUCCH carriers for HARQ-ACK transmission, e.g., in case deferral. Note, the rule for selecting PUCCH carrier, e.g., for deferral purpose for a given SPS ID can be based on any non-limited embodiment described herein over the set of indicated PUCCH carrier indices referred by DCI containing row index.

**Table 2: PUCCH carrier indicator maps to PUCCH carrier indices in RRC configured information subject to SPS ID**

| Index | SPS ID(s) | PUCCH carrier indices |
|---|---|---|
| 0 | 0 | 0,1 |
| 1 | 3 | 0,1 |
| 2 | 5 | 0,1 |
| 3 | 6 | 0 |
| 4 | 0,4 | 1 |
| 5 | 5,7 | 2 |
| 6 | 1,2,3 | 0,2 |
| 7 | 0,1,2,3,5,6 | 0,1,2 |
| 8 | 0,5,7 | 0 |

### Power control

When dynamic carrier switching is applied for HARQ-ACK such that the HARQ-ACK is to be transmitted on a dynamically-selected carrier c, the "TPC command for scheduled PUCCH" field in the scheduling DCI format is applied to the PUCCH on carrier c. Here the scheduling DCI refers to a DL DCI format that schedules a PDSCH, which is to be acknowledged by the HARQ-ACK. The DL DCI format include at least DCI format 1_1 and 1_2.

### PUCCH carrier switching with simultaneous PUCCH/PUSCH

For 3GPP Rel-17, it has been considered that simultaneous PUCCH/PUSCH transmissions on different cells is supported at least for inter-band carrier aggregation (CA). 3GPP has left further study whether this simultaneous PUCCH/PUSCH will to be supported for intra-band CA.

Per wireless device 22 with the capability of inter-band CA, simultaneous PUCCH/PUSCH transmission of different PHY priorities over different cells can be RRC configured within the same PUCCH group.

For wireless device 22 with the capability of simultaneous PUCCH/PUSCH transmission within the same PUCCH group, then the HARQ-ACK bits can be assigned to be carried by the PUSCH-only carrier(s) also, i.e., the HARQ-ACK bits are not restricted to the cell for PUCCH within the PUCCH group.

For the primary PUCCH group, the PUSCH-only carriers refer to the primary cell (i.e., PCell) in the primary PUCCH group. The PUSCH-only carrier refers to other cells in the primary PUCCH group.

For the secondary PUCCH group, the cell for PUCCH refers to the PUCCH-SCell of the secondary PUCCH group. The PUSCH-only carrier refers to other cells in the secondary PUCCH group.

When the HARQ-ACK codebook is scheduled on a PUSCH only cell c₁ at slot n:
If there exist one or more PUSCH in slot n of cell c₁ for carrying data payload (i.e., a transport block from the MAC layer), then the HARQ-ACK codebook is multiplexed onto a PUSCH of cell c₁. The PUSCH can be a dynamically scheduled PUSCH (e.g., scheduled by DCI format 0_0, 0_1, or 0_2), or a configured grant (CG) PUSCH if RRC configuration allows CG-PUSCH to be multiplexed with UCI;
If there is only one PUSCH in the slot n of cell c₁, then the HARQ-ACK CB is multiplexed onto this PUSCH;
If there are multiple PUSCH in the slot n of cell c₁, then the PUSCH overlapping with the pseudo-PUCCH is used for multiplexing with the HARQ-ACK CB. Here the pseudo-PUCCH is the PUCCH resource for carrying the HARQ-ACK (and potentially other UCI types) if the PUCCH is allowed to be transmitted in the PUSCH only cell c₁;
If there exist no PUSCH in slot n of cell c₁, then this is an error case, and the HARQ-ACK codebook is dropped by the wireless device 22.

In one or more embodiments, due to the simultaneous PUCCH/PUSCH transmission within the same PUCCH group, a PUCCH transmission on a cell capable of PUCCH (i.e., PCell or PUCCH-SCell) is not to be multiplexed with a PUSCH on the PUSCH-only cell in the same PUCCH group, even if the PUCCH and PUSCH overlap in time.

The assignment of HARQ-ACK bits on a PUSCH-only cell can be via either dynamic or semi-static PUCCH carrier switching. On the other hand, dynamic PUCCH carrier switching may be used so that the error case can be avoided.

The HARQ-ACK codebook for the PUSCH-only cell can be of any type, e.g., type 1 HARQ-ACK CB, type 2 HARQ-ACK CB, or type 3 HARQ-ACK CB (i.e., one shot HARQ-ACK feedback). The type can be configured specifically for this cell c₁, and it may be independent of, and different from the HARQ-ACK codebook type for the PUCCH group that cell c₁ belongs to.

Therefore, one or more embodiments described herein enable supports for Type-2 HARQ-ACK codebook and SPS HARQ-ACK deferral when PUCCH carrier switching is allowed. One or more embodiments described herein also provide alternative methods to enable PUCCH carrier switching based on certain rules and configurations.

With the full support of PUCCH carrier switching, it may be useful, e.g., for URLLC, to reduce the overall DL transmission latency which involves HARQ retransmission.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

Abbreviations that may be used in the preceding description include:

| Abbre viation | Explanation |
|---|---|
| CC | Component Carrier |
| CSI | Channel State Information |
| DCI | Downlink Control Information |
| FDM | Frequency Division Multiplexing |
| HARQ-ACK | Hybrid automatic repeat request Acknowledgement |
| PDCCH | Physical Downlink Control Channel |
| PDSCH | Physical Downlink Shared Channel |
| PUCCH | Physical Uplink Control Channel |
| PUSCH | Physical Uplink Shared Channel |
| SDM | Space Division Multiplexing |
| SPS | Semi-persistent scheduling |
| SR | Scheduling Request |
| TDM | Time Division Multiplexing |
| TRP | Transmission Reception Point |
| UCI | Uplink control information |

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method implemented by a wireless device (22) configured to communicate with a network node (16), the method comprising:
receiving (S146) a first indication of a first physical uplink control channel, PUCCH, carrier for dynamic PUCCH carrier switching; and
performing (S148) dynamic PUCCH carrier switching from a second PUCCH carrier to the first PUCCH carrier based at least on the first indication;
wherein the method further comprises receiving a second indication that a semi-persistent scheduling, SPS, hybrid automatic repeat request-acknowledgement, HARQ-ACK, deferral is enabled for the second PUCCH carrier, the dynamic PUCCH carrier switching being performed instead of the SPS HARQ-ACK deferral.

2. The method of Claim 1, wherein the first indication is one of:
a downlink assignment index, DAI, associated with the first PUCCH carrier;
a downlink semi-persistent scheduling, DL SPS, configuration associated with the first PUCCH carrier;
an activation DCI for indicating one of a plurality of sequences for PUCCH carrier indices to select, the plurality of sequences being configured via radio resource control, RRC, signaling; and
a multiple PUCCH carrier indication for SPS hybrid automatic repeat request-acknowledgement, HARQ-ACK, that is provided in one of:
an activation downlink control information, DCI; and
a bitmap of PUCCH carrier indices.

3. The method of any of Claims 1-2, wherein the dynamic PUCCH carrier switching is based at least on a physical downlink shared channel, PDSCH,-to- hybrid automatic repeat request-acknowledgement, HARQ, feedback timing indicator.

4. The method of Claim 3, wherein the PDSCH-to-HARQ feedback timing indicator one of:
indicates a HARQ-ACK timing value with respect to one of a default PUCCH carrier and other PUCCH carrier; and
indicates an invalid slot for PUCCH transmission; and
the processing circuitry being further configured to at least one of:
cause PUCCH transmission on a PUCCH carrier with a lowest carrier index of a plurality of valid PUCCH carriers based on the PDSCH-to-HARQ feedback timing indicator;
cause PUCCH transmission on a PUCCH carrier with a highest carrier index of the plurality of valid PUCCH carriers based on the PDSCH-to-HARQ feedback timing indicator; and
cause PUCCH transmission on a first listed PUCCH carrier of the plurality of valid PUCCH carriers based on the PDSCH-to-HARQ feedback timing indicator.

5. The method of any of Claims 1-4, wherein the dynamic PUCCH carrier switching is performed with simultaneous PUCCH and physical uplink shared channel, PUSCH, transmissions.

6. The method of any of Claims 1-4, wherein the method further comprises:
causing a transmission of hybrid automatic repeat request-acknowledgement, HARQ-ACK on the first PUCCH carrier, the transmission being based on a power control command associated with the second PUCCH carrier; and/or
receiving an activation downlink control information, DCI, message, the activation DCI message including the power control command and being associated with a physical downlink shared channel, PDSCH, associated with the HARQ-ACK.

7. A wireless device (22) configured to communicate with a network node (16), the wireless device (22) comprising processing circuitry (84) configured to perform the method of any of claims 1 to 6.

8. A method implemented by a network node (16) configured to communicate with a wireless device (22), the method comprising:
causing (S138) transmission of a first indication of a first physical uplink control channel, PUCCH, carrier for dynamic PUCCH carrier switching; and
receiving (S140) a PUCCH transmission that is based on dynamic PUCCH carrier switching from a second PUCCH carrier to the first PUCCH carrier in accordance with the first indication;
wherein the method further comprises causing transmission of a second indication that a semi-persistent scheduling, SPS, hybrid automatic repeat request-acknowledgement, HARQ-ACK, deferral is enabled for the second PUCCH carrier, the dynamic PUCCH carrier switching being performed instead of the SPS HARQ-ACK deferral.

9. The method of Claim 8, wherein the first indication is one of:
a downlink assignment index, DAI, associated with the first PUCCH carrier;
a downlink semi-persistent scheduling, DL SPS, configuration associated with the first PUCCH carrier;
an activation DCI for indicating one of a plurality of sequences for PUCCH carrier indices to select, the plurality of sequences being configured via radio resource control, RRC, signaling; and
a multiple PUCCH carrier indication for SPS hybrid automatic repeat request-acknowledgement, HARQ-ACK, that is provided in one of:
an activation downlink control information, DCI;
a bitmap of PUCCH carrier indices.

10. The method of any of Claims 8-9, wherein the dynamic PUCCH carrier switching is based at least on a physical downlink shared channel, PDSCH,-to- hybrid automatic repeat request-acknowledgement, HARQ, feedback timing indicator.

11. The method of any of Claims 8-10, wherein the PDSCH-to-HARQ feedback timing indicator one of:
indicates a HARQ-ACK timing value with respect to one of a default PUCCH carrier and other PUCCH carrier; and
indicates an invalid slot for PUCCH transmission.

12. The method of Claim 11, wherein the method further comprises:
receiving the PUCCH transmission on a PUCCH carrier with a lowest carrier index of a plurality of valid PUCCH carriers based on the PDSCH-to-HARQ feedback timing indicator;
receiving the PUCCH transmission on a PUCCH carrier with a highest carrier index of the plurality of valid PUCCH carriers based on the PDSCH-to-HARQ feedback timing indicator; and
receiving the PUCCH transmission on a first listed PUCCH carrier of the plurality of valid PUCCH carriers.

13. The method of any of Claims 8-12, wherein the method further comprises receiving a transmission of hybrid automatic repeat request-acknowledgement, HARQ-ACK on the first PUCCH carrier, the transmission being based on a power control command associated with the second PUCCH carrier.

14. The method of Claim 13, wherein the method further comprises transmitting to the wireless device (22) an activation downlink control information, DCI, message associated with a physical downlink shared channel, PDSCH, associated with the HARQ-ACK, the DCI message including the power control command.

15. A network node (16) configured to communicate with a wireless device (22), the network node (16) comprising processing circuitry (68) configured to perform the method of any of claims 8 to 14.

## Patentansprüche

1. Verfahren, das von einer drahtlosen Vorrichtung (22) implementiert wird, die zum Kommunizieren mit einem Netzwerkknoten (16) konfiguriert ist, wobei das Verfahren Folgendes umfasst:
Empfangen (S146) einer ersten Angabe eines ersten Physical Uplink Control-Trägers, PUCCH-Trägers, für dynamischen PUCCH-Trägerwechsel; und
Durchführen (S148) eines dynamischen PUCCH-Trägerwechsels von einem zweiten PUCCH-Träger zu einem PUCCH-Träger zumindest basierend auf der ersten Angabe;
wobei das Verfahren ferner Empfangen einer zweiten Angabe umfasst, dass eine Verzögerung einer Hybrid Automatic Repeat-Request-Bestätigung, HARQ-ACK, semipersistenter Disposition, SPS, für den zweiten PUCCH-Träger aktiviert ist, wobei der dynamische PUCCH-Trägerwechsel anstelle der SPS-HARQ-ACK-Verzögerung durchgeführt wird.

2. Verfahren nach Anspruch 1, wobei die erste Angabe eines von Folgenden ist:
ein Downlink-Zuordnungsindex, DAI, der mit dem ersten PUCCH-Träger assoziiert ist;
eine Konfiguration einer semipersistenten Downlink-Disposition, DL-SPS, die mit dem ersten PUCCH-Träger assoziiert ist;
eine Aktivierungs-DCI zum Angeben einer von einer Mehrzahl von Sequenzen für PUCCH-Trägerindizes zur Auswahl, wobei die Mehrzahl von Sequenzen über Funkressourcensteuerungssignalisierung, RRC-Signalisierung, konfiguriert wird; und
eine Angabe mehrerer PUCCH-Träger zur SPS-Hybrid-Automatic-Repeat-Request-Bestätigung, SPS-HARQ-ACK, die in einem von Folgenden bereitgestellt wird:
einer Aktivierungs-Downlink-Steuerinformation, Aktivierungs-DCI; und
einer Bitmap von PUCCH-Trägerindizes.

3. Verfahren nach einem der Ansprüche 1-2, wobei der dynamische PUCCH-Trägerwechsel zumindest auf einem Zeitvorgabeindikator einer Rückmeldung einer Physical Downlink Shared Channel, PDSCH,-zu-Hybrid Automatic Repeat Request-Bestätigung, HARQ-Bestätigung, basiert.

4. Verfahren nach Anspruch 3, wobei der PDSCH-zu-HARQ-Rückmeldungszeitvorgabeindikator entweder
einen HARQ-ACK-Zeitvorgabewert in Bezug auf einen von einem Standard-PUCCH-Träger und einem anderen PUCCH-Träger angibt; oder
einen ungültigen Schlitz für PUCCH-Übertragung angibt; und
die Verarbeitungsschaltungsanordnung ferner zu mindestens einem von Folgendem konfiguriert ist:
Veranlassen einer PUCCH-Übertragung auf einem PUCCH-Träger mit einem niedrigsten Trägerindex einer Mehrzahl von gültigen PUCCH-Trägern basierend auf dem PDSCH-zu-HARQ-Rückmeldungszeitvorgabeindikator;
Veranlassen einer PUCCH-Übertragung auf einem PUCCH-Träger mit einem höchsten Trägerindex der Mehrzahl von gültigen PUCCH-Trägern basierend auf dem PDSCH-zu-HARQ-Rückmeldungszeitvorgabeindikator; und
Veranlassen einer PUCCH-Übertragung auf einem ersten aufgelisteten PUCCH-Träger der Mehrzahl von gültigen PUCCH-Trägern basierend auf dem PDSCH-zu-HARQ-Rückmeldungszeitvorgabeindikator.

5. Verfahren nach einem der Ansprüche 1-4, wobei der dynamische PUCCH-Trägerwechsel bei simultanen PUCCH-und Physical Uplink Shared Channel-,PUSCH-,Übertragungen durchgeführt wird.

6. Verfahren nach einem der Ansprüche 1-4, wobei das Verfahren ferner Folgendes umfasst:
Veranlassen einer Übertragung einer Bestätigung einer Hybrid Automatic Repeat-Request, HARQ-ACK, auf dem ersten PUCCH-Träger, wobei die Übertragung auf einem Leistungsregelungsbefehl basiert, der mit dem zweiten PUCCH-Träger assoziiert ist; und/oder
Empfangen einer Nachricht mit einer Aktivierungs-Downlink-Steuerinformation, Aktivierungs-DCI, wobei die Aktivierungs-DCI-Nachricht den Leistungsregelungsbefehl umfasst und mit einem Physical Downlink Shared Channel, PDSCH, assoziiert ist, der mit der HARQ-ACK assoziiert ist.

7. Drahtlose Vorrichtung (22), konfiguriert zum Kommunizieren mit einem Netzwerkknoten (16), wobei die drahtlose Vorrichtung (22) Verarbeitungsschaltungsanordnung (84) umfasst, die zum Durchführen des Verfahrens nach einem der Ansprüche 1 bis 6 konfiguriert ist.

8. Verfahren, das von einem Netzwerkknoten (16) implementiert wird, der zum Kommunizieren mit einer drahtlosen Vorrichtung (22) konfiguriert ist, wobei das Verfahren Folgendes umfasst:
Veranlassen (S138) einer Übertragung einer ersten Angabe eines Physical Uplink Control-Trägers, PUCCH-Trägers, für dynamischen PUCCH-Trägerwechsel; und
Empfangen (S140) einer PUCCH-Übertragung, die auf einem dynamischen PUCCH-Trägerwechsel von einem zweiten PUCCH-Träger zu einem PUCCH-Träger gemäß der ersten Angabe basiert;
wobei das Verfahren ferner Veranlassen einer Übertragung einer zweiten Angabe umfasst, dass eine Verzögerung einer Hybrid Automatic Repeat-Request-Bestätigung, HARQ-ACK, semipersistenter Disposition, SPS, für den zweiten PUCCH-Träger aktiviert ist, wobei der dynamische PUCCH-Trägerwechsel anstelle der SPS-HARQ-ACK-Verzögerung durchgeführt wird.

9. Verfahren nach Anspruch 8, wobei die erste Angabe eines von Folgenden ist:
ein Downlink-Zuordnungsindex, DAI, der mit dem ersten PUCCH-Träger assoziiert ist;
eine Konfiguration einer semipersistenten Downlink-Disposition, DL-SPS, die mit dem ersten PUCCH-Träger assoziiert ist;
eine Aktivierungs-DCI zum Angeben einer von einer Mehrzahl von Sequenzen für PUCCH-Trägerindizes zur Auswahl, wobei die Mehrzahl von Sequenzen über Funkressourcensteuerungssignalisierung, RRC-Signalisierung, konfiguriert wird; und
eine Angabe mehrerer PUCCH-Träger für SPS-Hybrid-Automatic-Repeat-Request-Bestätigung, SPS-HARQ-ACK, die in einem von Folgenden bereitgestellt wird:
einer Aktivierungs-Downlink-Steuerinformation, DCI;
einer Bitmap von PUCCH-Trägerindizes.

10. Verfahren nach einem der Ansprüche 8-9, wobei der dynamische PUCCH-Trägerwechsel zumindest auf einem Zeitvorgabeindikator einer Rückmeldung einer Physical Downlink Shared Channel, PDSCH,-zu-Hybrid Automatic Repeat Request-Bestätigung, HARQ-Bestätigung, basiert.

11. Verfahren nach einem der Ansprüche 8-10, wobei der PDSCH-zu-HARQ-Rückmeldungszeitvorgabeindikator entweder
einen HARQ-ACK-Zeitvorgabewert in Bezug auf einen von einem Standard-PUCCH-Träger und einem anderen PUCCH-Träger angibt; oder
einen ungültigen Schlitz für PUCCH-Übertragung angibt.

12. Verfahren nach Anspruch 11, wobei das Verfahren ferner Folgendes umfasst:
Empfangen der PUCCH-Übertragung auf einem PUCCH-Träger mit einem niedrigsten Trägerindex einer Mehrzahl von gültigen PUCCH-Trägern basierend auf dem PDSCH-zu-HARQ-Rückmeldungszeitvorgabeindikator;
Empfangen der PUCCH-Übertragung auf einem PUCCH-Träger mit einem höchsten Trägerindex der Mehrzahl von gültigen PUCCH-Trägern basierend auf dem PDSCH-zu-HARQ-Rückmeldungszeitvorgabeindikator; und
Empfangen der PUCCH-Übertragung auf einem ersten aufgelisteten PUCCH-Träger der Mehrzahl von gültigen PUCCH-Trägern.

13. Verfahren nach einem der Ansprüche 8-12, wobei das Verfahren ferner Empfangen einer Übertragung einer Hybrid Automatic Repeat-Request-Bestätigung, HARQ-ACK, auf dem ersten PUCCH-Träger umfasst, wobei die Übertragung auf einem Leistungsregelungsbefehl basiert, der mit dem zweiten PUCCH-Träger assoziiert ist.

14. Verfahren nach Anspruch 13, wobei das Verfahren ferner Senden einer Nachricht mit einer Aktivierungs-Downlink-Steuerinformation, Aktivierungs-DCI, die mit einem Physical Downlink Shared Channel, PDSCH, assoziiert ist, der mit der HARQ-ACK assoziiert ist, an die drahtlose Vorrichtung (22) umfasst, wobei die DCI-Nachricht den Leistungsregelungsbefehl umfasst.

15. Netzwerkknoten (16), konfiguriert zum Kommunizieren mit einer drahtlosen Vorrichtung (22), wobei der Netzwerkknoten (16) Verarbeitungsschaltungsanordnung (68) umfasst, die zum Durchführen des Verfahrens nach einem der Ansprüche 8 bis 14 konfiguriert ist.

## Revendications

1. Procédé mis en œuvre par un dispositif sans fil (22) configuré pour communiquer avec un nœud de réseau (16), le procédé comprenant :
la réception (S146) d'une première indication d'une première porteuse de canal de commande de liaison montante physique, PUCCH, pour une commutation dynamique de porteuses PUCCH ; et
la réalisation (S148) d'une commutation dynamique de porteuses PUCCH d'une deuxième porteuse PUCCH à la première porteuse PUCCH sur la base au moins de la première indication ;
dans lequel le procédé comprend en outre la réception d'une deuxième indication qu'un report d'accusé de réception de demande de répétition automatique hybride, HARQ-ACK, de planification semi-persistante, SPS, est permis pour la deuxième porteuse PUCCH, la commutation dynamique de porteuses PUCCH étant réalisée au lieu du report SPS HARQ-ACK.

2. Procédé selon la revendication 1, dans lequel la première indication est l'un parmi :
un indice d'attribution de liaison descendante, DAI, associé à la première porteuse PUCCH ;
une configuration de planification semi-persistante de liaison descendante, DL SPS, associée à la première porteuse PUCCH ;
une DCI d'activation pour indiquer l'une d'une pluralité de séquences d'indices de porteuses PUCCH à sélectionner, la pluralité de séquences étant configurée via une signalisation de commande de ressources radio, RRC ; et
une indication de multiples porteuses PUCCH pour un accusé de réception de demande de répétition automatique hybride, HARQ-ACK, SPS qui est fournie dans l'un parmi :
une information de commande de liaison descendante, DCI, d'activation ; et
un bitmap d'indices de porteuses PUCCH.

3. Procédé selon l'une quelconque des revendications 1 et 2, dans lequel la commutation dynamique de porteuses PUCCH est basée au moins sur un indicateur de temporisation de canal partagé de liaison descendante physique, PDSCH, à rétroaction d'accusé de réception de demande de répétition automatique hybride, HARQ.

4. Procédé selon la revendication 3, dans lequel l'indicateur de temporisation de PDSCH à rétroaction HARQ :
indique une valeur de temporisation HARQ-ACK par rapport à l'une parmi une porteuse PUCCH par défaut et une autre porteuse PUCCH ; ou
indique un créneau non valide pour une transmission PUCCH ; et
la circuiterie de traitement est en outre configurée pour au moins l'un parmi :
provoquer une transmission PUCCH sur une porteuse PUCCH avec un indice de porteuse le plus bas parmi une pluralité de porteuses PUCCH valides sur la base de l'indicateur de temporisation de PDSCH à rétroaction HARQ ;
provoquer une transmission PUCCH sur une porteuse PUCCH avec un indice de porteuse le plus élevé parmi la pluralité de porteuses PUCCH valides sur la base de l'indicateur de temporisation de PDSCH à rétroaction HARQ ; et
provoquer une transmission PUCCH sur une première porteuse PUCCH listée parmi la pluralité de porteuses PUCCH valides sur la base de l'indicateur de temporisation de PDSCH à rétroaction HARQ.

5. Procédé selon l'une quelconque des revendications 1 à 4, dans lequel la commutation dynamique de porteuses PUCCH est réalisée avec des transmissions simultanées de PUCCH et de canal partagé de liaison montante physique, PUSCH.

6. Procédé selon l'une quelconque des revendications 1 à 4, dans lequel le procédé comprend en outre :
le fait de provoquer une transmission d'un accusé de réception de demande de répétition automatique hybride, HARQ-ACK, sur la première porteuse PUCCH, la transmission étant basée sur un ordre de commande de puissance associé à la deuxième porteuse PUCCH ; et/ou
la réception d'un message d'information de commande de liaison descendante, DCI, d'activation, le message DCI d'activation incluant l'ordre de commande de puissance et étant associé à un canal partagé de liaison descendante physique, PDSCH, associé au HARQ-ACK.

7. Dispositif sans fil (22) configuré pour communiquer avec un nœud de réseau (16), le dispositif sans fil (22) comprenant une circuiterie de traitement (84) configurée pour réaliser le procédé selon l'une quelconque des revendications 1 à 6.

8. Procédé mis en œuvre par un nœud de réseau (16) configuré pour communiquer avec un dispositif sans fil (22), le procédé comprenant :
le fait de provoquer (S138) la transmission d'une première indication d'une première porteuse de canal de commande de liaison montante physique, PUCCH, pour une commutation dynamique de porteuses PUCCH ; et
la réception (S140) d'une transmission PUCCH qui est basée sur une commutation dynamique de porteuses PUCCH d'une deuxième porteuse PUCCH à la première porteuse PUCCH sur la base de la première indication ;
dans lequel le procédé comprend en outre le fait de provoquer la transmission d'une deuxième indication qu'un report d'accusé de réception de demande de répétition automatique hybride, HARQ-ACK, de planification semi-persistante, SPS, est permis pour la deuxième porteuse PUCCH, la commutation dynamique de porteuses PUCCH étant réalisée au lieu du report SPS HARQ-ACK.

9. Procédé selon la revendication 8, dans lequel la première indication est l'un parmi :
un indice d'attribution de liaison descendante, DAI, associé à la première porteuse PUCCH ;
une configuration de planification semi-persistante de liaison descendante, DL SPS, associée à la première porteuse PUCCH ;
une DCI d'activation pour indiquer l'une d'une pluralité de séquences d'indices de porteuses PUCCH à sélectionner, la pluralité de séquences étant configurée via une signalisation de commande de ressources radio, RRC ; et
une indication de multiples porteuses PUCCH pour un accusé de réception de demande de répétition automatique hybride, HARQ-ACK, SPS qui est fournie dans l'un parmi :
une information de commande de liaison descendante, DCI, d'activation ; et
un bitmap d'indices de porteuses PUCCH.

10. Procédé selon l'une quelconque des revendications 8 et 9, dans lequel la commutation dynamique de porteuses PUCCH est basée au moins sur un indicateur de temporisation de canal partagé de liaison descendante physique, PDSCH, à rétroaction d'accusé de réception de demande de répétition automatique hybride, HARQ.

11. Procédé selon l'une quelconque des revendications 8 à 10, dans lequel l'indicateur de temporisation de PDSCH à rétroaction HARQ :
indique une valeur de temporisation HARQ-ACK par rapport à l'une parmi une porteuse PUCCH par défaut et une autre porteuse PUCCH ; ou
indique un créneau non valide pour une transmission PUCCH.

12. Procédé selon la revendication 11, dans lequel le procédé comprend en outre :
la réception de la transmission PUCCH sur une porteuse PUCCH avec un indice de porteuse le plus bas parmi une pluralité de porteuses PUCCH valides sur la base de l'indicateur de temporisation de PDSCH à rétroaction HARQ ;
la réception de la transmission PUCCH sur une porteuse PUCCH avec un indice de porteuse le plus élevé parmi la pluralité de porteuses PUCCH valides sur la base de l'indicateur de temporisation de PDSCH à rétroaction HARQ ; et
la réception de la transmission PUCCH sur une première porteuse PUCCH listée parmi la pluralité de porteuses PUCCH valides.

13. Procédé selon l'une quelconque des revendications 8 à 12, dans lequel le procédé comprend en outre la réception d'une transmission d'un accusé de réception de demande de répétition automatique hybride, HARQ-ACK, sur la première porteuse PUCCH, la transmission étant basée sur un ordre de commande de puissance associé à la deuxième porteuse PUCCH.

14. Procédé selon la revendication 13, dans lequel le procédé comprend en outre la transmission, au dispositif sans fil (22), d'un message d'information de commande de liaison descendante, DCI, d'activation associé à un canal partagé de liaison descendante physique, PDSCH, associé au HARQ-ACK, le message DCI incluant l'ordre de commande de puissance.

15. Nœud de réseau (16) configuré pour communiquer avec un dispositif sans fil (22), le nœud de réseau (16) comprenant une circuiterie de traitement (68) configurée pour réaliser le procédé selon l'une quelconque des revendications 8 à 14.
